# EUROPEAN PATENT SPECIFICATION

(11) **EP 1 524 913 B1**
(45) Date of publication and mention of the grant of the patent: **05.09.2007**
(21) Application number: 03765180.9
(22) Date of filing: 23.07.2003
(51) Int. Cl.: A23L 1/09, A23P 1/08, A23G 3/00

(54) **POLYOL COATED FOOD PRODUCTS**
POLYOLBESCHICHTETE LEBENSMITTEL
PRODUITS ALIMENTAIRES ENROBES PAR DES POLYOLS

(30) Priority: 23.07.2002 GB 0217076
(43) Date of publication of application: 27.04.2005
(60) Divisional application: 06077097.1
(73) Proprietor: Mars Incorporated, McLean, Virginia 22101-3883 (US)
(72) Inventor: JOHNSTON, Andrew, Gordon, Masterfoods, Slough SL1 4JX (GB); MEYER, Jeremy, Z., Masterfoods, Slough SL1 4JX (GB)
(74) Representative: Marlow, Nicholas Simon
(86) International application number: PCT/GB2003/003162
(87) International publication number: WO 2004/008877

(56) References cited:
- EP-A- 0 305 356
- WO-A-95/07625
- WO-A-20/04016093
- US-A- 3 477 858
- US-A- 3 552 979
- US-A- 3 556 814
- US-A- 3 769 438
- US-A- 4 146 653
- US-A- 5 580 601
- US-A- 5 900 261

## Description

The present invention relates to a novel foodstuff, such as a confectionery product.

Confectionery products comprising a hard core surrounded by a hard sugar coating or shell are well known. The sugar coatings or shells of such products are commonly formed by hard panning cores in a rotary pan. In this process, a sugar syrup is sprayed over the cores to coat them and the water in the syrup is then evaporated, typically in a flow of warm air, to crystallise the sugar as a hard, thin coating. The spraying and drying steps must be repeated several times in order to build up a sugar coating of satisfactory thickness. To allow each sugar layer to set before the next is applied, significant drying times are required between successive syrup sprayings; this results in the overall hard panning process being slow. Furthermore, large quantities of well controlled drying air or conditioning equipment are required in order to evaporate the water from the sugar syrup.

During hard panning, as the water is evaporated from the syrup to crystallise the sugar the viscosity of the syrup gradually increases. This makes such coating techniques employing sugar syrups unsuitable for coating soft, fragile cores; an increase in adhesiveness, associated with the increase in viscosity, causes the cores to stick to one another, tearing them apart. In addition, the use of sugar syrups in such techniques makes them unsuitable for coating cores which absorb sugar syrup or which are moisture sensitive or hygroscopic.

Coated soft centres typically have soft coatings for example chocolate or soft panned sugar coatings, such as those on jelly beans.

Coatings based on a solidified melt of sorbitol or mannitol are known from US-A-3,552,979 and US-A-3,977,858. Coatings based on an erythritol syrop are known from WO-A-95/07625.

It has now been found that coated foodstuffs may be produced having hard, crystalline, sugar free coatings which resemble hard panned sugar coatings in texture and taste, and which are shiny or lustrous and so, in contrast to hard panned sugar coatings, do not need to be polished to achieve an acceptable finish.

According to a first aspect of the invention there is provided a coated foodstuff having a core and a hard coating, around the core characterised in that the coating is a solidified melt comprising at least 90% crystalline erythritol by weight.

Preferably the coating contains at least 95% crystalline erythritol by weight.

Preferably the coating further comprises up to 10% by weight of a second polyol, being mannitol, xylitol, sorbitol, maltitol, lactitol, isomaltulose or isomalt, more preferably up to 5% by weight of the second polyol. The inclusion of a second polyol improves the distribution of the coating over the core and provides a smoother coating than erythritol alone.

Preferably the thickness of the coating is about 1.0mm or less, more preferably about 0.5mm or less.

Preferably the coating is 50% or less by weight of the foodstuff, more preferably about 30% or less by weight of the foodstuff.

The coating may also comprise other common confectionery ingredients such as colourants, flavourants, acidulants, artificial sweeteners, preservatives and antioxidants. The coating may also comprise air, carbon dioxide, nitrogen, bicarbonate or other sources of gas.

Preferably the core comprises a polyol, more preferably erythritol or xylitol.

Preferably the core contains between about 60% and about 90% erythritol or xylitol by weight, between about 2% and about 25% fat by weight and between about 2% and about 20% polyol syrup by weight, more preferably between about 75% and about 85% erythritol or xylitol by weight, between about 10% and about 20% fat by weight and between about 2% and about 10% polyol syrup by weight.

According to a second aspect of the present invention there is provided a method of manufacturing a coated foodstuff having a core and a hard coating around the core comprising: (a) forming a core; (b) melting a coating material comprising at least 90% erythritol by weight; (c) applying the molten coating material around the core; and (d) solidifying the molten coating material to form a crystalline coating around the core.

Preferably the method comprises dipping the core in the molten coating material or spraying the molten coating material onto the core.

Preferably the method comprises melting a coating material comprising at least 95% erythritol by weight.

Preferably the method comprises melting a coating material comprising at least 90% erythritol by weight and up to 10% by weight of at least one further polyol, being mannitol, xylitol, sorbitol, maltitol, lactitol, isomaltulose or isomalt by weight, more preferably melting a coating material comprising at least 95% erythritol by weight and up to 5% by weight of at least one further polyol, being mannitol, xylitol, sorbitol, maltitol, lactitol, isomaltulose or isomalt.

It has also now been found that hard, crystalline coatings may be applied to fragile cores which cannot be coated using sugar syrups by conventional hard panning.

The term fragile core is used throughout the specification to mean a core to which a hard panned sugar coating cannot be applied either because the core absorbs sugar syrup or is moisture sensitive or hygroscopic and/or because the structural integrity of the core is insufficient to withstand the increase in viscosity and associated increase in adhesiveness which occurs as water is evaporated from a sugar syrup to crystallise the sugar. Examples of fragile cores include soft fondants, marshmallows and frangible cores such as aerated or expanded products, including expanded malted balls such as the centres of Maltesers^{®} made by Mars UK.

Encapsulating cores with a thin, for example 0.5mm or less, coating of a molten polyol by the methods of the invention produces a robust shell which is tolerant to being worked, for example, processed, tumbled and packed. By reducing the thickness of the coating required to produce a satisfactory coating or shell, the invention enables coated foodstuffs to be produced in which the proportion of the foodstuff made up of the core may be greatly increased compared to hard panned sugar coated products.

A number of polyols, such as xylitol and erythritol, are known to deliver a cooling effect in the mouth when consumed due to their high negative heats of solution. By using erythritol, as coating materials in combination with polyol, preferably erythritol or xylitol, based cores such as fondants, the methods of the invention enable coated confectioneries which deliver an intense cooling effect and which have improved cooling power over known polyol containing products to be manufactured; upon ingestion, the polyol based fondant may disappear rapidly, but the cooling effect delivered by the crystalline polyol coating continues.

By using polyols as the coating material in the methods of the invention it is possible to produce hard, crystalline coatings which are sugar free.

The invention will be further described, by way of the following examples of specific embodiments thereof:

### Example 1

Spherical fondant cores, 0.5 to 1.5cm in diameter, comprising. by weight. 80.7% icing sugar, 8.7% hydrogenated vegetable fat, 8.2% invert syrup and 2.4% colourant and flavourant are mounted on wooden sticks and dipped in bath of molten erythritol at 130°C, containing 0.25% by weight of aqueous 10% quinolline yellow solution, and then chilled in a refrigerator at 0-5°C for 5 to 10 minutes. The cores are then removed from the refrigerator and the dipping and chilling steps repeated twice.

### Example 2

2.5kg of the spherical fondant cores of Example 1, 0.5 to 1.5cm in diameter, are placed in a rotating pan and sprayed or dribbled with 60g to 80g of molten erythritol at 130°C, containing 0.25% by weight of aqueous 10% quinolline yellow solution. Cold air at 0-5°C is then applied to the tumbling cores for 10 minutes. The dribbling/spraying and cooling steps are then repeated three times.

### Example 3

Spherical fondant cores, 0.5 to 1.5cm in diameter, comprising 80.6% erythritol, 6.0% hydrogenated vegetable fat, 12.0% maltitol syrup (80% solids), 1.0% citric acid, 0.2% of aqueous 10% quinolline yellow solution and 0.2% flavourant are dropped into a bath of molten erythritol at 130°C, containing 0.25% by weight of aqueous 10% quinolline yellow solution and 1.8% by weight 50/50 citric acid/malic acid blend. The cores are then recovered from the bath using a fork and rolled along a flat metallic bench. The cores are then cooled for 5 to 10 minutes either in a refrigerator at 0-5°C or with cold air at 0-5°C. The dipping, rolling and cooling steps are then repeated.

### Example 4

Spherical fondant cores, 0.5 to 1.5cm in diameter, comprising, by weight, 82.3% xylitol, 12.0% hydrogenated vegetable fat, 4.0% sorbitol syrup (70% solids), 1.3% citric acid, 0.2% of aqueous 10% quinolline yellow solution and 0.2% flavourant are dropped into a bath of molten erythritol at 130°C, containing 0.25% by weight of aqueous 10% quinolline yellow solution and 1.8% by weight 50/50 citric acid/malic acid blend. The cores are then recovered from the bath using a fork and rolled along a flat metallic bench. The cores are then cooled for 5 to 10 minutes either in a refrigerator at 0-5°C or with cold air at 0-5°C. The dipping, rolling and cooling steps are then repeated three times.

Example 1 produced coated foodstuffs consisting of a spherical fondant core surrounded by a hard, smooth, brittle coating. The coating exhibited a yellow/orange pearlescent character.

In Example 2, the molten erythritol solidified almost instantaneously upon coming into contact with the fondant cores and the cores showed no tendency to adhere to one another. The coated foodstuffs produced consisted of a fondant core surrounded by a hard, brittle coating that exhibited a yellow/orange pearlescent character.

In Examples 3 and 4, during the rolling steps the molten erythritol did not adhere to the metallic bench, while the coated foodstuffs remained intact.

Examples 3 and 4 produced coated foodstuffs, each weighing 1.3g, consisting of a fondant core surrounded by a hard, strong, 0.5mm thick coating. The coating was 40% by weight of the foodstuff. Once again, the coating exhibited a yellow/orange pearlescent character. The cooling effects delivered by the polyol based fondant cores were enhanced and prolonged by the cooling effect of the crystalline erythritol coating.

Inclusion of up to 5% by weight of a second polyol, being erythritol, mannitol, erythritol, xylitol, sorbitol, maltitol, lactitol, isomaltulose or isomalt, leads to a reduction in melting point of about 17°C, such that the resultant erythritol and mannitol based mixtures melt at 107°C and 150°C respectively.

In all of the above Examples, aqueous 10% quinolline yellow solution was added to the molten erythritol in order to aid visual assessment of the quality of the coatings produced. It will be readily appreciated that a variety of colourants, flavourants, acidulants, artificial sweeteners, preservatives, antioxidants and edible additives may be added to the molten coating, provided that where the coating is being used to coat fragile cores the liquid coating material still solidifies rapidly to a crystalline form with substantially no increase in viscosity. It will further be appreciated that insoluble colourants or other additives may be employed as dispersion in the molten coating material without the need for solution. Air, carbon dioxide, nitrogen, bicarbonate or other sources of gas may also be incorporated into the coating to give an aerated effect if desired.

While fondant cores are employed in the Examples given above, it will be readily appreciated by those skilled in the art that hard, shiny or lustrous coatings comprising at least 90% crystalline erythritol by weight may similarly be formed on a variety of other soft and hard cores such as hard candy, chocolate, chewing gum tablets, toffees, popcorn and expanded centres formed by vacuum raising or gas evolution.

It will also be appreciated that while hydrogenated vegetable fat is employed in the fondant cores in the above Examples, other fats, such as lauric fats could alternatively be employed. A preferred hydrogenated vegetable fat is that known as General purpose Fat Extra Hard.

Similarly, while in the Examples above the cores are spherical, it will be readily appreciated that cores having other shapes could be employed, such as, for example, cuboid, toroidal, egg-shaped, pillow-shaped, almond-shaped or torpedo-shaped cores. The application of successive layers of viscous sugar syrup to cores in known coating methods, such as hard panning, tends to increase the roundness of the cores. Consequently, when employing such methods it is difficult to produce a coated confectionery whose overall shape conforms to that of the core if the core is significantly non-spherical. The use of a coating material comprising a polyol that melts to give a low viscosity liquid, which solidifies rapidly to a crystalline form with substantially no increase in viscosity, in the methods of the present invention mitigates this problem, particularly when the coating is formed by dipping the core in the molten coating material.

By eliminating the need for viscous syrups, the method of the invention enables foodstuffs having fragile cores and hard, crystalline coatings to be produced. By eliminating the need for sugar syrups containing water, the method of the invention also enables foodstuffs having hard, crystalline coatings and cores which absorb sugar syrup or which are moisture sensitive or hygroscopic to be produced.

A second coating, which may be incompatible with the core, can then be applied to the coated core. For example, a fragile hygroscopic core can be encased within a polyol coating by the method of the invention and then a further aqueous coating, such as a sugar syrup coating, may be applied to the coated core.

As the methods of the present invention do not involve the evaporation of water from a sugar syrup, the need for large quantities of well controlled drying air or conditioning equipment, as required in hard panning processes, is also eliminated.

As the molten coating material solidifies rapidly, the methods of the invention also enable cores to be coated in much reduced times compared to those required with hard panning techniques.

## Claims

1. A coated foodstuff having a core and a hard coating comprising at least 90% crystalline erythritol by weight around the core **characterised in that** the coating is a solidified melt.

2. A foodstuff according to claim 1 wherein the coating comprises at least 95% crystalline erythritol by weight.

3. A foodstuff according to claim 1 wherein the coating further comprises up to 10% by weight of at least one further polyol, being mannitol, xylitol, sorbitol, maltitol, lactitol, isomaltulose or isomalt.

4. A foodstuff according to claim 2 wherein the coating further comprises up to 5% by weight of at least one further polyol, being mannitol, xylitol, sorbitol, maltitol, lactitol, isomaltulose or isomalt.

5. A foodstuff according to any preceding claim wherein the thickness of the coating is 1.0mm or less.

6. A foodstuff according to any preceding claim wherein the thickness of the coating is 0.5mm or less.

7. A foodstuff according to any preceding claim wherein the coating is 50% or less by weight of the foodstuff.

8. A foodstuff according to any preceding claim wherein the coating is 30% or less by weight of the foodstuff.

9. A foodstuff according to any preceding claim wherein the core is a fragile core.

10. A foodstuff according to any preceding claim wherein the core is a soft fondant.

11. A foodstuff according to any preceding claim wherein the core comprises a polyol.

12. A foodstuff according to any preceding claim wherein the core comprises erythritol or xylitol.

13. A foodstuff according to any preceding claim wherein the core contains between 75% and 85% erythritol or xylitol by weight, between 10% and 20% fat by weight and between 2% and 10% polyol syrup by weight.

14. A confectionery product according to any preceding claim.

15. A method of manufacturing a coated foodstuff having a core and a hard coating around the core comprising:
(a) forming a core;
(b) melting a coating material comprising at least 90% erythritol by weight;
(c) applying the molten coating material around the core; and
(d) solidifying the molten coating material to form a crystalline coating around the core.

16. A method according to claim 15 wherein step (c) comprises dipping the core in the molten coating material.

17. A method according to claim 15 wherein step (c) comprises spraying the molten coating material onto the core.

18. A method according to claim 15, 16 or 17 wherein step (b) comprises melting a coating material comprising at least 90% erythritol by weight and up to 10% by weight of at least one further polyol, being mannitol, xylitol, sorbitol, maltitol, lactitol, isomaltulose or isomalt.

19. A method according to claim 15, 16 or 17 wherein step (b) comprises melting a coating material comprising at least 95% erythritol by weight.

20. A method according to claim 19 wherein step (b) comprises melting a coating material comprising at least 95% erythritol by weight and up to 5% by weight of at least one further polyol, being mannitol, xylitol, sorbitol, maltitol, lactitol, isomaltulose or isomalt.

## Patentansprüche

1. Beschichtetes Nahrungsmittel mit einem Kern und einer wenigstens 90 Gew.-% kristallines Erythritol beinhaltenden harten Beschichtung um den Kern, **dadurch gekennzeichnet, dass** die Beschichtung eine verfestigte Schmelze ist.

2. Nahrungsmittel nach Anspruch 1, wobei die Beschichtung wenigstens 95 Gew.-% kristallines Erythritol beinhaltet.

3. Nahrungsmittel nach Anspruch 1, wobei die Beschichtung ferner bis zu 10 Gew.-% von wenigstens einem weiteren Polyol, nämlich Mannitol, Xylitol, Sorbitol, Maltitol, Lactitol, Isomaltulose oder Isomalt beinhaltet.

4. Nahrungsmittel nach Anspruch 2, wobei die Beschichtung ferner bis zu 5 Gew.-% von wenigstens einem weiteren Polyol, nämlich Mannitol, Xylitol, Sorbitol, Maltitol, Lactitol, Isomaltulose oder Isomalt beinhaltet.

5. Nahrungsmittel nach einem der vorherigen Ansprüche, wobei die Dicke der Beschichtung 1,0 mm oder weniger beträgt.

6. Nahrungsmittel nach einem der vorherigen Ansprüche, wobei die Dicke der Beschichtung 0,5 mm oder weniger beträgt.

7. Nahrungsmittel nach einem der vorherigen Ansprüche, wobei die Beschichtung 50 Gew.-% oder weniger des Nahrungsmittels umfasst.

8. Nahrungsmittel nach einem der vorherigen Ansprüche, wobei die Beschichtung 30 Gew.-% oder weniger des Nahrungsmittels umfasst.

9. Nahrungsmittel nach einem der vorherigen Ansprüche, wobei der Kern ein zerbrechlicher Kern ist.

10. Nahrungsmittel nach einem der vorherigen Ansprüche, wobei der Kern ein weicher Fondant ist.

11. Nahrungsmittel nach einem der vorherigen Ansprüche, wobei der Kern ein Polyol beinhaltet.

12. Nahrungsmittel nach einem der vorherigen Ansprüche, wobei der Kern Erythritol oder Xylitol beinhaltet.

13. Nahrungsmittel nach einem der vorherigen Ansprüche, wobei der Kern zwischen 75 Gew.-% und 85 Gew.-% Erythritol öder Xylitol, zwischen 10 Gew.-% und 20 Gew.-% Fett und zwischen 2 Gew.-% und 10 Gew.-% Polyolsirup enthält.

14. Süßwarenprodukt nach einem der vorherigen Ansprüche.

15. Verfahren zur Herstellung eines beschichteten Nahrungsmittels mit einem Kern und einer harten Beschichtung um den Kern, das die folgenden Schritte beinhaltet:
(a) Bilden eines Kerns;
(b) Schmelzen eines Beschichtungsmaterials, das wenigstens 90 Gew.-% Erythritol umfasst;
(c) Aufbringen des geschmolzenen Beschichtungsmaterials um den Kern; und
(d) Verfestigen des geschmolzenen Beschichtungsmaterials, um eine kristalline Beschichtung um den Kern zu bilden.

16. Verfahren nach Anspruch 15, wobei Schritt (c) das Eintauchen des Kerns in das geschmolzene Beschichtungsmaterial beinhaltet.

17. Verfahren nach Anspruch 15, wobei Schritt (c) das Sprühen des geschmolzenen Beschichtungsmaterials auf den Kern beinhaltet.

18. Verfahren nach Anspruch 15, 16 oder 17, wobei Schritt (b) das Schmelzen eines Beschichtungsmaterials beinhaltet, das wenigstens 90 Gew.-% Erythritol und bis zu 10 Gew.-% von wenigstens einem weiteren Polyol, nämlich Mannitol, Xylitol, Sorbitol, Maltitol, Lactitol, Isomaltulose oder Isomalt umfasst.

19. Verfahren nach Anspruch 15, 16 oder 17, wobei Schritt (b) das Schmelzen eines Beschichtungsmaterials beinhaltet, das wenigstens 95 Gew.-% Erythritol umfasst.

20. Verfahren nach Anspruch 19, wobei Schritt (b) das Schmelzen eines Beschichtungsmaterials beinhaltet, das wenigstens 95 Gew.-% Erythritol und bis zu 5 Gew.-% von wenigstens einem weiteren Polyol, nämlich Mannitol, Xylitol, Sorbitol, Maltitol, Lactitol, Isomaltulose oder Isomalt umfasst.

## Revendications

1. Produit alimentaire enrobé ayant un centre et un enrobage dur comprenant au moins 90% d'érythritol cristallin en poids autour du centre, **caractérisé en ce que** l'enrobage est un produit fondu solidifié.

2. Produit alimentaire selon la revendication 1, dans lequel l'enrobage comprend au moins 95% d'érythritol cristallin en poids.

3. Produit alimentaire selon la revendication 1, dans lequel l'enrobage comprend en outre jusqu'à 10% en poids d'un autre polyol au moins, s'agissant de mannitol, xylitol, sorbitol, maltitol, lactitol, isomaltulose ou isomalt.

4. Produit alimentaire selon la revendication 2, dans lequel l'enrobage comprend en outre jusqu'à 5% en poids d'un autre polyol au moins, s'agissant de mannitol, xylitol, sorbitol, maltitol, lactitol, isomaltulose ou isomalt.

5. Produit alimentaire selon l'une quelconque des revendications précédentes, dans lequel l'épaisseur de l'enrobage est de 1,0 mm ou moins.

6. Produit alimentaire selon l'une quelconque des revendications précédentes, dans lequel l'épaisseur de l'enrobage est de 0,5 mm ou moins.

7. Produit alimentaire selon l'une quelconque des revendications précédentes, dans lequel l'enrobage fait 50% en poids ou moins du produit alimentaire.

8. Produit alimentaire selon l'une quelconque des revendications précédentes, dans lequel l'enrobage fait 30% en poids ou moins du produit alimentaire.

9. Produit alimentaire selon l'une quelconque des revendications précédentes, dans lequel le centre est un centre fragile.

10. Produit alimentaire selon l'une quelconque des revendications précédentes, dans lequel le centre est un fondant mou.

11. Produit alimentaire selon l'une quelconque des revendications précédentes, dans lequel le centre comprend un polyol.

12. Produit alimentaire selon l'une quelconque des revendications précédentes, dans lequel le centre comprend de l'érythritol ou du xylitol.

13. Produit alimentaire selon l'une quelconque des revendications précédentes, dans lequel le centre contient entre 75% et 85% en poids d'érythritol ou de xylitol, entre 10% et 20% en poids de matière grasse et entre 2% et 10% en poids de sirop de polyol.

14. Produit de confiserie selon l'une quelconque des revendications précédentes.

15. Procédé de fabrication d'un produit alimentaire enrobé ayant un centre et un enrobage dur autour du centre, comprenant:
(a) former un centre;
(b) faire fondre une matière d'enrobage comprenant au moins 90% en poids d'érythritol;
(c) appliquer la matière d'enrobage fondue autour du centre; et
(d) solidifier la matière d'enrobage fondue pour former un enrobage cristallin autour du centre.

16. Procédé selon la revendication 15, dans lequel l'étape (c) comprend plonger le centre dans la matière d'enrobage fondue.

17. Procédé selon la revendication 15, dans lequel l'étape (c) comprend pulvériser la matière d'enrobage fondue sur le centre.

18. Procédé selon la revendication 15, 16 ou 17, dans lequel l'étape (b) comprend faire fondre une matière d'enrobage comprenant 90% en poids au moins d'érythritol et jusqu'à 10% en poids d'un autre polyol au moins, s'agissant de mannitol, xylitol, sorbitol, maltitol, lactitol, isomaltulose ou isomalt.

19. Procédé selon la revendication 15, 16 ou 17, dans lequel l'étape (b) comprend faire fondre une matière d'enrobage comprenant au moins 95% en poids d'érythritol.

20. Procédé selon la revendication 19, dans lequel l'étape (b) comprend faire fondre une matière d'enrobage comprenant au moins 95% en poids d'érythritol et jusqu'à 5% en poids d'un autre polyol au moins, s'agissant de mannitol, xylitol, sorbitol, maltitol, lactitol, isomaltulose ou isomalt.
